# EUROPEAN PATENT SPECIFICATION

(11) **EP 0 658 296 B1**
(45) Date of publication and mention of the grant of the patent: **27.01.1999**
(21) Application number: 93918492.5
(22) Date of filing: 29.07.1993
(51) Int. Cl.: H04N 5/10

(54) **TV line detection and selection apparatus with high noise immunity**
Störunempfindliche Vorrichtung zur Erkennung und Auswahl von Fernsehzeilen
Appareil de détection et sélection de lignes vidéo insensible aux perturbations

(30) Priority: 01.09.1992 GB 9218476
(43) Date of publication of application: 21.06.1995
(73) Proprietor: THOMSON CONSUMER ELECTRONICS, INC., Indianapolis Indiana 46201 (US)
(72) Inventor: TULTS, Juri, Indianapolis, IN 46226 (US)
(74) Representative: Wördemann, Hermes, Dipl.-Ing.
(86) International application number: US9307142
(87) International publication number: WO9406243

(56) References cited:
- US-A- 4 172 262
- US-A- 5 025 496
- EDN vol. 35, no. 4, 15 February 1990, NEWTON (US) page 185 ANDREW K DART 'Simple circuit extracts TV sync pulse'
- PATENT ABSTRACTS OF JAPAN vol. 10, no. 87 (E-393) 5 April 1986 & JP,A,60 229 590 ( NIPPON DENKI KK ) 14 November 1985
- PATENT ABSTRACTS OF JAPAN vol. 6, no. 123 (E-117) 8 July 1982 & JP,A,57 052 280 ( SANYO ELECTRIC CO.,LTD. ) 27 March 1982
- IEEE TRANSACTIONS ON CONSUMER ELECTRONICS vol. 38, no. 3, August 1992, NEW YORK (US) pages 261 - 267 N.F. HURLEY 'A SINGLE CHIP LINE 21 CAPTIOING DECODER'

## Description

The present invention relates to detection of information that may be present in a video signal during vertical blanking intervals. A video signal typically includes vertical display intervals, or fields, having a plurality of horizontal line intervals, e.g. 262.5 lines per field in NTSC video systems. The beginning of each vertical and horizontal interval is identified by respective vertical and horizontal sync pulses that are included in a composite video signal. During a portion of each vertical interval, information in the video signal may not be intended for display. For example, a vertical blanking interval spans approximately the first 20 horizontal line intervals in each field. In addition, several line intervals adjacent to the vertical blanking period, e.g. line 21, may be within an overscan region of a video display and will not be visible.

The lack of displayed image information during blanking and overscan intervals makes it possible to insert an auxiliary information component, e.g. teletext or closed caption data, into these intervals. Standards such as Federal Communications Commissions (FCC) Regulations define the format for each type of auxiliary information including the positioning of the information within a vertical interval. For example, the present closed captioning standard (see e.g. 47 CFR §§ 15.119 and 73.682) specifies that digital data corresponding to ASCII characters for closed captioning must be in line 21 of field 1. Future modifications to the standard may permit auxiliary information such as closed caption data to be located in other lines, e.g. line 21 of every field.

Auxiliary video information is extracted from the video signal using a decoder. Acceptable performance of the decoder requires reliable identification of the particular lines and fields of the video signal that include auxiliary video data. Examples of approaches to identifying particular video line intervals are disclosed in JP-A-57 052 280, US-A-4 172 262, JP-A-60 229 590 and EDN vol. 35, no.4, 15. February 1990, Newton (US), p. 185. If video signal strength decreases (e.g. caused by poor reception), the probability of errors in the decoder output increases. For example, detection of synchronizing events in a video signal, such as vertical sync pulses, may provide a timing reference point for identifying video lines (e.g. line 21) that may contain auxiliary video information. However, a decrease in video signal strength causes a corresponding decrease in sync signal amplitude. Attempting to decode auxiliary video information from a weak video signal increases the likelihood either that the desired synchronizing pulses may not be detected or that noise pulses may be erroneously interpreted as the desired synchronizing pulses. As a result, a decoder may operate incorrectly in response to a weak video signal.

The error rate of the decoder should remain at an acceptable level as long as the strength of the video signal is sufficient to produce a "viewable" picture. The point at which the error rate becomes unacceptable depends on the content of the auxiliary information. For example, an error rate causing loss of several characters of closed caption text during an interval spanning several minutes may not be objectionable. It is desirable, however, to minimize the error rate over a broad range of video signal strength.

In accordance with aspects of the present invention, apparatus comprises first detecting means for detecting a first pulse included in a synchronization component of a video signal for indicating the beginning of a vertical display interval of the video signal, the synchronization component having vertical synchronization pulses and horizontal synchronization pulses; a counter responsive to a clock signal having a period representative of a horizontal display interval of the video signal for generating a count representing the number of horizontal display intervals within the vertical display interval after the first detecting means has detected the first pulse; means responsive to the clock signal for generating an enable signal defining an enable interval beginning in response to the count being a predetermined count and ending after a time interval greater than a defined phase difference between a horizontal synchronization pulse of the synchronization component and the clock signal; and second detecting means responsive to the enable signal for detecting during the enable interval a second pulse included in the synchronization component for indicating the start of a predetermined horizontal display interval in the vertical display interval, the second pulse being substantially centered within the enable interval by setting said phase difference between a horizontal synchronization pulse and said clock signal to a predetermined value.

The invention may be better understood by referring to the drawings in which:
Figure 1 shows a circuit diagram of a portion of a video signal processing system that includes video line detection apparatus according to the present invention; and
Figures 2 and 3 show signal waveforms useful for understanding the operation of the circuit shown in Figure 1.

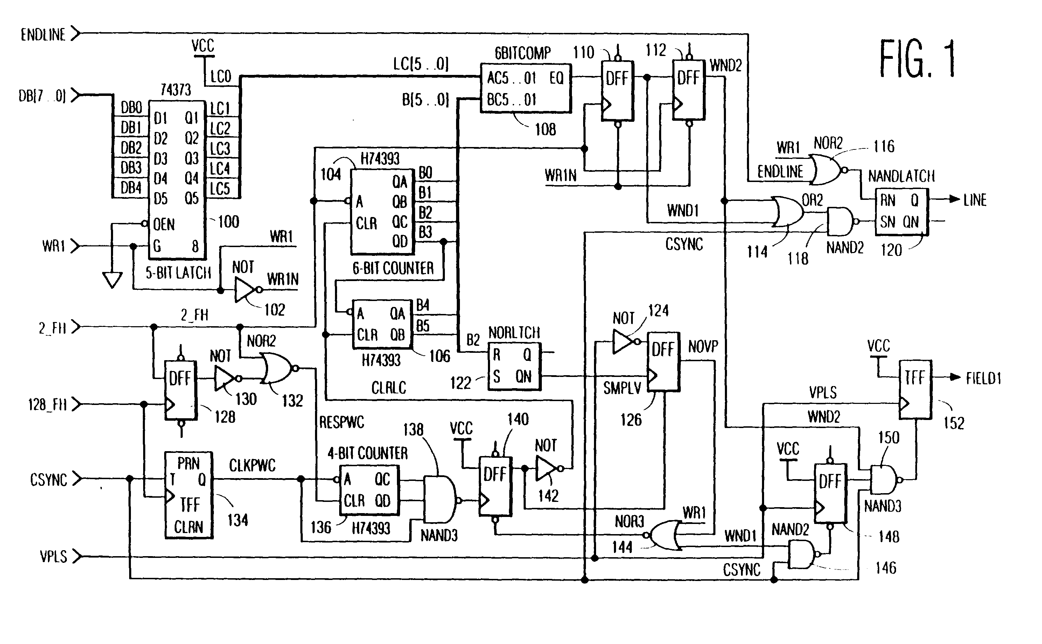

In regard to the following detailed description of an embodiment of the invention that is shown in the drawing, it should be remembered that a television system may include features for generating various synchronizing signals. For example, a sync separator may produce sync signals derived from the sync components of the video signal. Deflection circuitry produces repetitive sync signals at regular intervals to define uniform electron beam deflection intervals. The input signals for the circuit in Figure 1 include a separated sync signal CSYNC derived from the video signal, and a flyback pulse VPLS from the vertical deflection circuitry.

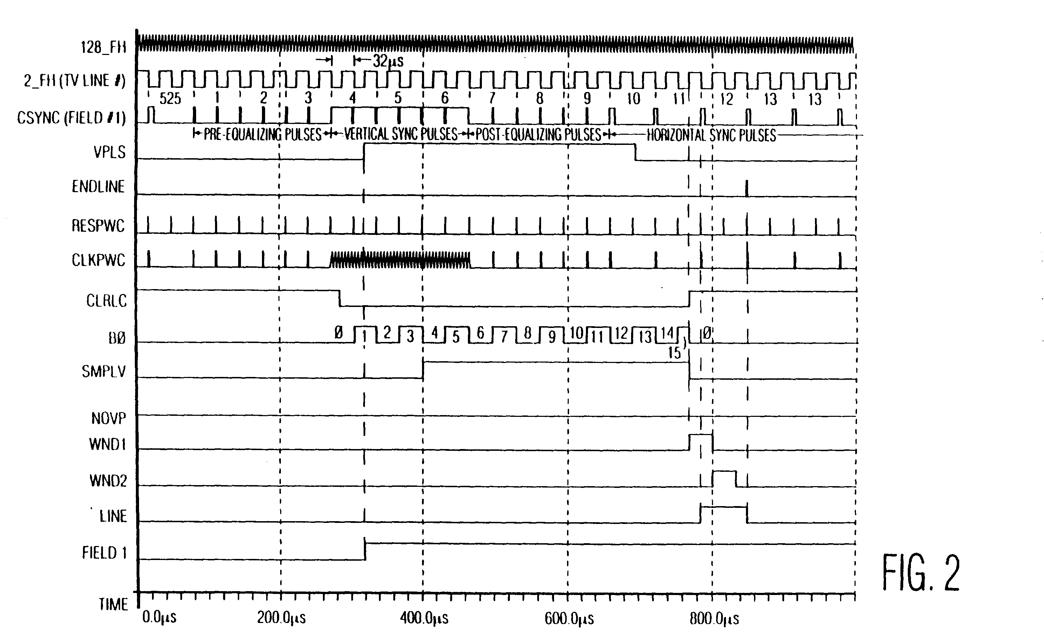

Other input signals in Figure 1 include signals 128FH and 2FH which serve as clock signals at frequencies of 128 times the horizontal rate and 2 times the horizontal rate, respectively. For NTSC systems, signals 128FH and 2FH have periods of approximately .5 µs and 32 µs, respectively. Signals 128FH and 2FH may be generated at the outputs of appropriate stages of a counter (not shown in Figure 1). This counter may be part of, for example, a high frequency phase lock loop (PLL) associated with an on-screen display (OSD) feature that may be included in the video system. The PLL is locked to the horizontal deflection pulses and, therefore, indirectly to the horizontal sync component of the video signal. As a result, normal horizontal sync pulses in signal CSYNC line up with every other falling edge of signal 2 FH as shown in Figure 2.

Input signal WR1 in Figure 1 may be generated, for example, by a microcomputer (µC) (not shown in Figure 1) that controls the system. Signal WR1 serves to reset some circuits and load a number (also supplied by the µC) into 5-bit latch 100 at the start of operation. The number stored in latch 100 is related to the TV line to be identified. Changing the number in latch 100 permits changing the line number that will be identified in accordance with the specification for the type of auxiliary information that is being decoded.

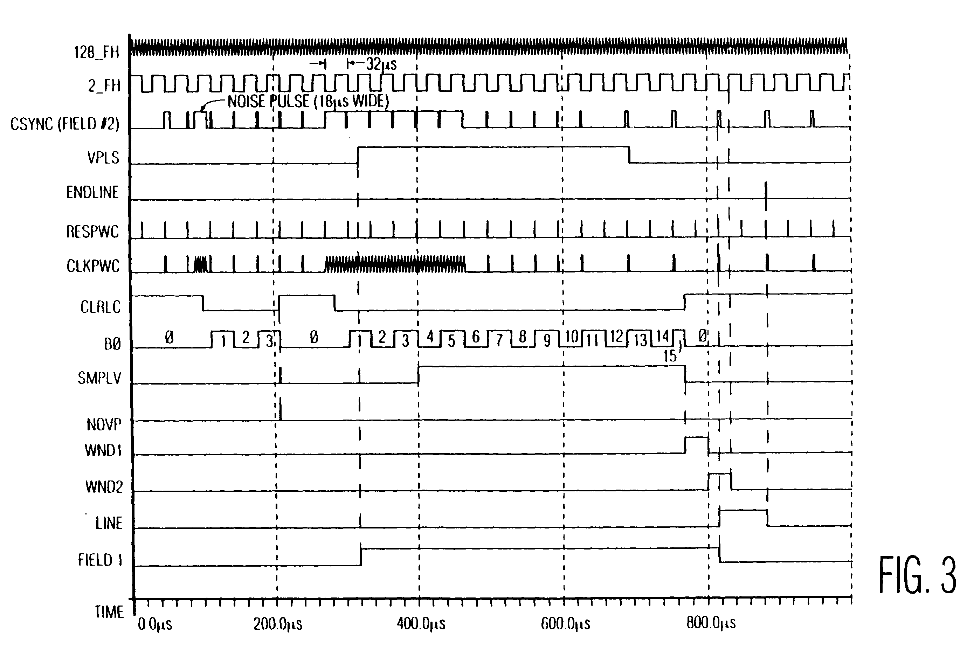

For the exemplary embodiment shown in Figure 1, the relationship between the number loaded in latch 100 and the particular line identified by the system is: L = N - 5, where N is the line to be identified, and L is the number loaded in latch 100. As is discussed further below, the value 5 that is subtracted from N is related to the line number at which the first wide vertical pulse occurs as defined by the particular video signal specification (e.g. line 4 in field 1 for NTSC standard signals as shown in Figure 2). The following description of the operation of the embodiment in Figure 1, and the waveforms in Figures 2 and 3, assumes that the values of N and L are 12 and 7, respectively. Thus, line 12 is being identified and the number 7 is loaded in 5-bit latch 100. As will be apparent from the following description, different values may be used for N and L to permit identifying other line numbers, e.g. line 21 for closed caption data.

The circuit shown in Figure 1 looks for a pulse in signal CSYNC which is wider than 12 µs, i.e. it looks for the first wide vertical sync pulse which is normally 30 µs long (the approximate width of horizontal sync and equalizing pulses is 4 µs and 2 µs respectively). This function is implemented with 4-stage counter 136. Counter 136 is reset every 32 µs by signal RESPWC, a narrow pulse generated at the falling edge of signal 2FH by D-type flip flop (DFF) 128, inverter 130, and NOR gate 132. Counter 136 is clocked by signal CLKPWC at 1 µs intervals whenever signal CSYNC is at logic 1. Signal CLKPWC is generated by toggle flip flop (TFF) 134 having a clock input coupled to signal 128FH and a toggle input (T) coupled to signal CSYNC.

A count of 12 in counter 136 is detected by NAND gate 138 when signal CLKPWC is high. The output of NAND gate 138 is coupled to the clock input of DFF 140. The output of DFF 140 goes to logic 1 in response to counter 136 reaching a count of 12. Signal CLRLC, an inverted version of the output of DFF 140 via inverter 142, is coupled to the reset input of a 6-bit counter comprised of counters 104 and 106. The clock input of counter 104 is coupled to signal 2FH. The most significant output of counter 104 clocks counter 106. The effect of counter 136 reaching a count of 12 is that the reset signal to counters 104 and 106 is removed enabling counters 104 and 106 to count negative transitions of signal 2 FH after counter 136 reaches a count of 12.

When the count produced by counters 104 and 106 reaches the value stored in latch 100, as determined by comparator 108, 32 µs wide window pulse signal WND1 is generated by DFF 110 in synchronism with positive transitions of signal 2 FH. Another 32 µs wide window pulse on signal WND2 is generated by DFF 112 when the window pulse on signal WND1 terminates.

As shown in Figure 1, the least significant bit of the "A" input to comparator 108 (input from latch 100) is hard-wired to logic 1 (VCC) while the number stored in latch 100 is coupled to the remaining "A" inputs of comparator 108. The effect is that the value at the "A" input of comparator 108 is equal to (2 x L) + 1. This approach is used so that changing the value of L by an integer amount causes the line number being detected to change by the same integer amount. For example, storing 16 rather than 7 in latch 100 will cause line 21 rather than line 12 to be detected.

The value of L is multiplied by 2 in the relationship (2 x L) + 1 because counters 104 and 106 are being clocked at twice the horizontal line rate by signal 2FH. The number 1 is added to (2 x L) because it is desirable to shift the window pulses on signals WND1 and WND2 by one-half of a horizontal line interval (1 cycle of signal 2FH) so that the horizontal sync pulse occurring at the beginning of the desired line will be centered in the window pulse. Thus, for the described exemplary embodiment, comparator 108 will indicate that the output of counters 104 and 106 equals the latch value L, and enable the generation of the window pulses, when the count value at the output of counters 104 and 106 is 15 (i.e. (2 x 7) +1). The value in counters 104 and 106 is indicated on the waveform for signal B0 (the least significant counter output bit) in Figures 2 and 3. The signal timing depicted in Figures 2 and 3 illustrates that the difference between the line number being identified (N) and the value stored in latch 100 (L) is the above-mentioned value 5 for the exemplary embodiment shown in Figure 1 operating with NTSC standard signals.

A sync pulse in the signal CSYNC waveform which occurs during one of the two window pulses is the sync pulse that corresponds to the start of the desired TV line (line 12 in the described embodiment) as shown in Figure 2. A sync pulse on signal CSYNC during one of the window pulses is detected via OR gate 114 and NAND gate 118. The output of NAND gate 118 provides a "set" signal at the set input of set-reset latch 120. Signal LINE at the output of latch 120 becomes active (goes to logic 1 in Figures 1 to 3) in response to the set signal to indicate detection of the desired line.

The active state of signal LINE is terminated 64 µs later by signal ENDLINE coupled to the reset input of latch 120 via NOR gate 116. The 64 µs interval is defined by a counter (not shown in Figure 1) that is enabled for counting when the desired horizontal sync pulse occurs as indicated by signal LINE. The counter is clocked by signal 128FH having a period of .5 µs until a count of 128 is produced indicating that a 64 µs period has elapsed. Signal ENDLINE is then generated to terminate signal LINE.

A field identification signal FIELD1 is generated at the output of TFF 152. The rising edge of the vertical deflection pulse on signal VPLS clocks TFF 152 to produce signal FIELD1.

The preceding comments describe the operation of the embodiment shown in Figure 1 under normal conditions, i.e. a strong signal and no noise. In accordance with aspects of the invention, features of the exemplary embodiment shown in Figure 1 operate to ensure reliable operation during weak or noisy signal conditions.

Two lines (equivalent to four half-lines as counted with the 2 FH clock) after the 6-bit counter comprised of counters 104 and 106 is activated by signal CLRLC, the status of the vertical pulse on signal VPLS at the output of inverter 124 is sampled by DFF 126. The two line sampling delay is established by set-reset latch 122. Signal CLRLC at the set input of latch 122 "sets" signal SMPLV at the inverted output of latch 122 to logic 0 when signal CLRLC is at logic 1 inactivating counters 104 and 106. Signal B2 from the third least significant output of the 6-bit counter (22 output) is coupled to the reset input of latch 122. Signal B2 goes to logic 1 after four pulses (a two video line interval) occur on signal 2FH. Thus, when signal CLRLC activates counters 104 and 106 by going to logic 0, the set signal to latch 122 is removed enabling a high level on signal B2 (after a two video line interval) to reset latch 122 causing signal SMPLV to go to logic 1. The transition of signal SMPLV from logic 0 to logic 1 after two line intervals clocks DFF 126 sampling the inverted signal VPLS.

If the vertical pulse is absent, signal NOVP at the output of DFF 126 becomes a logic 1. Absence of the vertical pulse on signal VPLS when the sampling operation occurs indicates that the wide pulse detected by counter 136 and NAND gate 138 is a noise pulse. A logic 1 on signal NOVP resets DFF 140 via NOR gate 144 causing signal CLRLC go to logic 1. As a result, counters 104 and 106 are cleared preventing the generation of window pulses on signals WND1 and WND2.

The described feature prevents a wide noise pulse in signal CSYNC that is not in the immediate vicinity of the the normal vertical sync pulses from erroneously generating the LINE signal. As an example, Figure 3 illustrates the operation when an 18 µs wide noise pulse occurs between the first two pre-equalizing pulses in signal CSYNC. The operation of the noise detection feature is relatively independent of the phase and width of the vertical pulse on signal VPLS. The desired noise pulse detection operation occurs as long as the vertical pulse on signal VPLS does not start more than two lines after the first vertical sync pulse on signal CSYNC, and is at least two lines wide.

Values other than the above-described two line (four half line) period may be used for the delay between detection of a wide pulse (wider than 12 µs) on signal CSYNC and testing for the presence of the vertical pulse on signal VPLS. Different video systems may exhibit timing relationships between signals CSYNC and VPLS that differ from the relationship shown in Figures 2 and 3. For example, in certain video systems the vertical pulse on signal VPLS from deflection circuitry may begin during line 5 rather than line 4 as indicated in Figure 2. Testing for the presence of a vertical sync pulse on signal VPLS during line 4 (a 2 line delay) when a vertical sync pulse does not begin until line 5 will cause detection of the first wide vertical pulse on signal CSYNC to be erroneously interpreted as detection of a noise pulse. Changing the delay to a 3-line delay would eliminate this problem. Thus, the operation of the described embodiment may be adapted to the requirements of various video systems.

In a noise-free environment, the desired horizontal sync pulse in signal CSYNC will always occur in the middle of the window pulse on signal WND1 in field 1, and in the middle of the window pulse on signal WND2 in field 2 as shown in Figures 2 and 3, respectively. This characteristic could be used for field identification, but the result may not be correct under weak signal conditions if one or more pulses occur in both adjacent windows. The circuit in Figure 1 solves this problem by using the very reliable and noise-free vertical deflection pulse on signal VPLS to toggle TFF 152 to produce signal FIELD 1.

To ensure that signal FIELDI has the correct phase, signal FIELD1 is forced into the correct state by resetting the toggle flip-flop whenever the correct sequence of events for field 2 has been detected. This corresponds to a pulse in signal CSYNC not occurring in the window pulse on signal WND1, but being present in the immediately following window pulse on signal WND2. Detection of the sequence of events indicating field 2 is provided by NAND gates 146 and 150, and DFF 148. Operation of the described feature is illustrated in Figure 3 where the wrong polarity of signal FIELD1 has been assumed at the start.

As described above, the active state of signal LINE is terminated by signal ENDLINE. Signal LINE could be terminated by the pulse in signal CSYNC which immediately follows the pulse on signal CSYNC that occurs during the window pulse on signal WND1 or WND2. However, noise on signal CSYNC might cause premature termination of signal LINE. Thus, signal ENDLINE is reliably generated regardless of the presence of noise as previously described.

Another feature that improves noise immunity involves using signal 2 FH rather than signal CSYNC as the clock for the line counter. Signal 2FH is the output of a counter stage in a PLL and is, therefore, relatively stable. Signal CSYNC is derived from the video signal and may exhibit noise pulses corresponding to noise in the video signal.

It should be noted that any given number loaded into the 5-bit latch will result in signal LINE becoming active for the corresponding line during field 1 as well as during field 2. It may be necessary, therefore, to interrogate the status of signal FIELD1 to determine whether the signal LINE is in the desired field. For example, present closed caption standards limit closed caption information to line 21 of field 1. This may be accomplished by having a µC that is controlling the system test the state of signal FIELD1 when signal LINE is active. Alternatively, hardwired logic could be used to condition signal LINE with signal FIELD1.

Another feature of the disclosed arrangement is that the 32 µs width of the window pulses on signals WND1 and WND2 permits a phase error approaching +/-16 µs between the horizontal sync pulses on signal CSYNC and every other falling edge of 2 FH. This is an important feature because relatively large phase errors may occur. For example, in the case of a video cassette recorder (VCR) having mechanical misadjustments in the tape reading mechanism, the video line just before the start of the vertical blanking period where the read heads are switched is stretched (or less commonly compressed) and has a period substantially different from 64 µs. The speed of the horizontal PLL may be too slow to correct this error by the time the first wide vertical sync pulse occurs on signal CSYNC. The resulting phase error may have a magnitude approaching 16 µs. The phase error tolerance of the disclosed arrangement permits accurate decoding of auxiliary information to occur despite the existence of phase error.

## Claims

1. Apparatus including:
first detecting means (136, 138) for detecting a first pulse included in a synchronization component (CSYNC) of a video signal for indicating the beginning of a vertical display interval of said video signal, the synchronization component having vertical synchronization pulses and horizontal synchronization pulses;
a counter (104) responsive to a clock signal (2_FH) having a period representative of a horizontal display interval of said video signal for generating a count (BO) representing the number of said horizontal display intervals within said vertical display interval after said first detecting means (136, 138) has detected said first pulse;
means (110,112) responsive to said clock signal (2_FH) for generating an enable signal (WND1) defining an enable interval beginning in response to said count being a predetermined count and ending after a time interval greater than a defined phase difference between a horizontal synchronisation pulse of said synchronisation component and said clock signal (2_FH); and
second detecting means (114, 118) responsive to said enable signal (WND1) for detecting during said enable interval a second pulse included in said synchronization component (CSYNC) for indicating the start of a predetermined horizontal display interval in said vertical display interval, said second pulse being substantially centered within said enable interval (WND1) by setting said phase difference between a horizontal synchronization pulse and said clock signal to a predetermined value.

2. The apparatus of claim 1 wherein said means (110) for generating said enable signal (WND1) generates a second enable signal (WND2) for defining a second enable interval beginning substantially coincident with the end of the first enable interval and having a duration substantially equal to the first enable interval; and said second detecting means (114, 116, 118, 120) detects said second pulse during only one of said first and second enable intervals.

3. The apparatus of claim 1 wherein the duration of said enable interval is substantially one-half of one of said horizontal line intervals.

4. The apparatus of claim 2 wherein the duration of each of said first and second enable intervals is substantially one-half of one of said horizontal line intervals.

5. The apparatus of claim 1 wherein said means for detecting said first pulse (136, 138) includes a second counter (136) for counting cycles of a second clock signal (128-FH) at a frequency substantially greater than the frequency of occurrence of said horizontal line intervals, said second counter (136) counting during said first pulse to produce a second count representative of the duration of said first pulse; and means (138) for evaluating said second count (138) to determine, if said first pulse exhibits a predetermined duration.

6. The apparatus of claim 5 wherein said predetermined duration is substantially equal to the duration of a first wide equalizing pulse in a vertical interval of an NTSC format synchronisation component.

7. The apparatus of claim 6 wherein said clock signal period is 1/2 of the period of said horizontal line interval; said second clock signal period is 1/128 of the period of said horizontal line intervals; and said predetermined value of said phase difference is 0.

## Patentansprüche

1. Vorrichtung, enthaltend:
erste Erkennungsmittel (136, 138) zum Erkennen eines ersten Impulses, der zur Anzeige des Beginns eines Vertikal-Wiedergabeintervalls des Videosignals in einer Synchronisierkomponente (CSYNC) des Videosignals enthalten ist, wobei die Synchronisierkomponente Vertikal-Synchronimpulse und Horizontal-Synchronimpulse enthält,
einen Zähler (104), der auf ein Taktsignal (2_FH) mit einer ein Horizontal-Wiedergabeintervall des Videosignals darstellenden Periode anspricht, zum Erzeugen eines Zählwertes (BO), der die Zahl der Horizontal-Wiedergabeintervalle in dem Vertikal-Wiedergabeintervall anzeigt, nachdem die ersten Erkennungsmittel (136, 138) den ersten Impuls erkannt haben, Mittel (110, 112), die auf das Taktsignal (2_FH) ansprechen und ein Freigabesignal (WND1) erzeugen, das ein Freigabeintervall bestimmt, das aufgrund des Zählwertes beginnt, der ein vorbestimmter Zählwert ist und nach einem Zeitintervall endet, das größer ist als eine bestimmte Phasendifferenz zwischen einem Horizontal-Synchronimpuls der Synchronisierkomponente und dem Taktsignal (2_FH), und
zweite Erkennungsmittel (114, 118), die auf das Freigabesignal (WND1) ansprechen und während des Freigabeintervalls einen zweiten Impuls erkennen, der in der Synchronisierkomponente (CSYNC) enthalten ist, zur Anzeige des Beginns eines vorbestimmten Horizontal-Wiedergabeintervalls in dem Vertikal-Wiedergabeintervall, wobei der zweite Impuls im wesentlichen in der Mitte des Freigabeintervalls (WND1) liegt, indem die Phasendifferenz zwischen einem Horizontal-Synchronimpuls und dem Taktsignal auf einen vorbestimmten Wert gesetzt wird.

2. Vorrichtung nach Anspruch 1, wobei die Mittel (110) zum Erzeugen des Freigabesignals (WND1) ein zweites Freigabesignal (WND2) zur Bestimmung eines zweiten Freigabeintervalls erzeugen, das im wesentlichen zeitgleich mit dem Ende des ersten Freigabeintervalls beginnt und eine Dauer hat, die im wesentlichen gleich ist dem ersten Freigabeintervall, und wobei die zweiten Erkennungsmittel (114, 116, 118, 120) den zweiten Impuls während nur eines Intervalls des ersten und des zweiten Freigabeintervalls erkennen.

3. Vorrichtung nach Anspruch 1, wobei die Dauer des Freigabeintervalls im wesentlichen gleich einer Hälfte eines Intervalls der Horizontal-Zeilenintervalle ist.

4. Vorrichtung nach Anspruch 2, wobei die Dauer jedes Intervalls der ersten und zweiten Freigabeintervalle im wesentlichen gleich einer Hälfte eines Intervalls der Horizontal-Zeilenintervalle ist.

5. Vorrichtung nach Anspruch 1, wobei die Mittel zum Erkennen des ersten Impulses (136, 138) einen zweiten Zähler (136) zum Zählen der Perioden eines zweiten Taktsignals (128_FH) mit einer Frequenz enthalten, die wesentlich größer ist als die Frequenz der Horizontal-Zeilenintervalle, und wobei der zweite Zähler (136) während des ersten Impulses zählt und einen zweiten Zählwert erzeugt, der die Dauer des ersten Impulses darstellt, und Mittel (138) zum Auswerten des zweiten Zählwertes (138) vorgesehen sind, um zu ermitteln, ob der erste Impuls eine vorbestimmte Dauer aufweist.

6. Vorrichtung nach Anspruch 5, wobei die vorbestimmte Dauer im wesentlichen gleich der Dauer eines ersten breiten Ausgleichsimpulses oder Trabanten in einem Vertikal-Intervall einer Synchronisierkomponente nach der NTSC-Norm ist.

7. Vorrichtung nach Anspruch 6, wobei die Taktsignal-Periode gleich 1/2 der Periode des Horizontal-Zeilenintervalls, die Periode des zweiten Taktsignals gleich 1/128 der Periode der Horizontal-Zeilenintervalle und der vorbestimmte Wert der Phasendifferenz gleich 0 ist.

## Revendications

1. Dispositif comportant :
un premier dispositif de détection (136, 138) permettant de détecter une première impulsion contenue dans la composante de synchronisation (CSYNC) d'un signal vidéo, indiquant le début d'un intervalle d'affichage vertical dudit signal vidéo, la composante de synchronisation comportant des impulsions de synchronisation verticales et des impulsions de synchronisation horizontales,
un compteur (104) qui, en fonction d'un signal d'horloge (2_FH) ayant une période qui représente l'intervalle d'affichage horizontal dudit signal vidéo, génère un compte (B0) représentant le nombre desdits intervalles d'affichage horizontal au cours dudit intervalle d'affichage vertical une fois que ledit premier dispositif de décodage (136, 138) a détecté ladite première impulsion,
un dispositif (110, 112) qui, en fonction dudit signal d'horloge (2_FH), génère un signal d'autorisation (WND1) définissant un intervalle d'autorisation commençant lorsque ledit compte a atteint une valeur prédéterminée et se terminant après un intervalle de temps supérieur à une différence de phase prédéfinie entre les impulsions de synchronisation horizontale de ladite composante de synchronisation et ledit signal d'horloge (2_FH), et,
un second dispositif de détection (114, 118) qui, en fonction dudit signal d'autorisation (WND1), détecte au cours dudit intervalle d'autorisation une seconde impulsion de synchronisation incluse dans ladite composante de synchronisation (CSYNC) et indiquant le début d'un intervalle d'affichage horizontal prédéfini au cours dudit intervalle d'affichage vertical, ladite seconde impulsion étant à peu près centrée à l'intérieur dudit intervalle d'autorisation (WND1) grâce au choix d'une valeur prédéterminée de ladite différence de phase entre l'impulsion de synchronisation horizontale et ledit signal d'horloge.

2. Dispositif selon la revendication 1, où ledit dispositif (110) de génération dudit signal d'autorisation (WND1) génère un second signal d'autorisation (WND2) qui définit un second intervalle d'autorisation commençant à peu près en coïncidence avec la fin du premier intervalle d'autorisation et qui a une durée sensiblement égale à celle du premier intervalle d'autorisation, et où un second dispositif de détection (114, 116, 118, 120) détecte ladite seconde impulsion au cours des l'un desdits premier et second intervalles d'autorisation.

3. Dispositif selon la revendication 1, où la durée dudit intervalle d'autorisation est à peu près égale à la moitié de l'un desdits intervalles ligne horizontaux.

4. Dispositif selon la revendication 2, où la durée de chacun desdits premier et second intervalles d'autorisation est à peu près égale à la moitié de l'un desdits intervalles ligne horizontaux.

5. Dispositif selon la revendication 1, où ledit dispositif de détection de ladite première impulsion (136, 138) comporte un second compteur (136) comptant les cycles d'un second signal d'horloge (128_FH) à une fréquence sensiblement plus élevée que la fréquence d'occurrence desdits intervalles ligne horizontaux, ledit compteur (136) comptant pendant ladite première impulsion de manière à générer une seconde valeur de comptage représentative de la durée de ladite première impulsion, et un dispositif (138) évaluant ledit second compte (138) de manière à déterminer si ladite première impulsion présente une durée prédéfinie.

6. Dispositif selon la revendication 5, où ladite durée prédéfinie est à peu près égale à la durée de la première impulsion d'égalisation large de l'intervalle vertical de la composante de synchronisation au format NTSC.

7. Dispositif selon la revendication 6, où la période dudit signal d'horloge est égale à ½ de la période dudit intervalle ligne horizontal, où la période dudit second signal d'horloge est égale à 1/128 de la période desdits intervalle ligne horizontaux et où ladite valeur prédéfinie de ladite différence de phase est égale à 0.
